Europäisches Patentamt

European Patent Office

Office européen des brevets

(11) Numéro de publication : **0 501 857 B1**

(12)                     **FASCICULE DE BREVET EUROPEEN**

(45) Date de publication du fascicule du brevet :
**13.07.94 Bulletin 94/28**

(51) Int. Cl.⁵ : **G01V 1/22, H04L 1/00**

(21) Numéro de dépôt : **92400454.2**

(22) Date de dépôt : **20.02.92**

(54) **Méthode et dispositif de transmission sismique à taux d'erreur très faibles.**

(30) Priorité : **22.02.91 FR 9102243**

(43) Date de publication de la demande :
**02.09.92 Bulletin 92/36**

(45) Mention de la délivrance du brevet :
**13.07.94 Bulletin 94/28**

(84) Etats contractants désignés :
**DE FR GB IT NL**

(56) Documents cités :
**EP-A- 0 128 624
EP-A- 0 184 495
WO-A-85/04298
GB-A- 2 149 276**

(56) Documents cités :
**IEEE TRANSACTIONS ON COMMUNICATION
TECHNOLOGY, vol. 26, no. 5, 1 Mai 1978, New
York, US, pages 534-542; F. de Jager et al:
"Tamed frequency modulation, a novel
method to achieve spectrum economy in digital transmission"**

(73) Titulaire : **INSTITUT FRANCAIS DU PETROLE
4, avenue de Bois Préau
F-92502 Rueil-Malmaison (FR)**

(72) Inventeur : **Rialan, Joseph
15, rue Bigôts
F-92190 Meudon (FR)**
Inventeur : **Grouffal, Christian
14, allée Louis David
F-92500 Rueil-Malmaison (FR)**

## Description

La présente invention concerne une méthode et un dispositif de transmission de données sismiques à taux d'erreur très réduit.

Les méthodes modernes de prospection sismique requièrent la transmission de masses de données importantes. Elles sont mises en oeuvre en disposant dans la zone d'exploration de très nombreux appareils d'acquisition de données répartis à intervalles réguliers sur des distances souvent de plusieurs kilomètres. Chacun d'eux est adapté à collecter des signaux sismiques captés par un ou plusieurs récepteurs appropriés (hydrophones ou géophones) en réponse à des ébranlements transmis dans le sous-sol à explorer par une source sismique et qui sont renvoyés par les discontinuités dans celui-ci. Les signaux qu'ils collectent sont échantillonnés, numérisés et stockés dans une mémoire avant leur transmission en temps réel ou différé, à un poste central de commande et d'enregistrement. La transmission des données entre les différents appareils d'acquisition et le poste central, s'effectue par voie hertzienne. Différents systèmes de transmission par radio ou par câble sont décrits par exemple dans les brevets US 4 583 206, 4 979 152, 4 815 044 et la demande de brevet FR 2 652 162.

Pour transmettre par voie hertzienne, on utilise un signal porteur dont la phase est modulée en fonction du signal à transmettre suivant un mode de modulation particulier d'un type connu : FSK, MSK, PDSK etc.

Les signaux modulant sont des trains de bits avec de brusques variations d'amplitude aux instants de transition successifs entre les bits. Ces discontinuités ont pour effet principal un élargissement notable de la bande passante nécessaire à toute transmission. C'est un inconvénient notable du fait notamment des restrictions qu'imposent souvent les réglementations en matière de télécommunications.

On connaît notamment par l'article : "Tamed Frequency Modulation, A novel method to achieve spectrum economy in digital transmission" in IEEE Transaction vol. com-26 No. 5, May 1978, une méthode de modulation qui vise à adoucir les transitions de phases précédentes et donc à réduire la bande passante nécessaire à une transmission de données numérisées. Cette méthode consiste essentiellement à appliquer à la porteuse une variation de phase qui ne dépend pas seulement d'un bit à transmettre mais du bit précédent et du bit suivant avec une pondération appropriée. La phase de la porteuse subit de ce fait des variations moindres avec pour résultat un spectre d'émission plus étroit. Au lieu de transmettre des bits successifs, on transmet des symboles combinant trois bits successifs. La combinaison effectuée est glissante, chacun des bits successifs à transmettre étant combiné avec ses deux voisins.

L'avantage d'une bande passante plus étroite procuré par ce type de modulation dit TFM a pour contrepartie connue une certaine modification de la répartition des erreurs, celles-ci se retrouvant groupées par paquets (bursts).

Les erreurs survenant dans les transmissions peuvent avoir des causes très diverses : fading, parasites de commutation, diaphonie entre voies dans les systèmes de transmission multi-voies etc. Du fait des groupements de bits opérés dans le cadre d'une modulation du type TFM, tout incident de transmission éventuel affecte de façon aléatoire un ou plusieurs des symboles transmis, et les erreurs possibles se trouvent reportées au décodage sur tous les bits constitutifs de chacun d'eux.

On connait de nombreuses méthodes de codage des données à transmettre qui permettent à la réception, de détecter et de corriger d'éventuelles erreurs. Ces méthodes comportent l'emploi de codage par blocs avec transformation de toute séquence de bits à transmettre en mots successifs comportant un groupe de bits de contrôle dépendant du code choisi : codes de Hamming, codes cycliques, codes dit BCH, codes de Reed-Salomon, codes de Golay etc. D'autres méthodes utilisent des codages du type dit convolutionnel où l'encodage des bits de données dans chaque bloc dépend d'un certain nombre de blocs antérieurs.

Dans le cadre des transmissions de données sismiques notamment, il est particulièrement utile de bien détecter et corriger les erreurs. Par le brevet FR 2 574 190 (US 4 712 199) par exemple on connaît une méthode de transmission où l'on découpe aussi les séries de mots à transmettre en blocs de mots contenant le même nombre d'échantillons de signaux, pourvus chacun de signaux de synchronisation et d'identification. Par un contrôle de ces signaux d'accompagnement et du nombre de mots dans les différents blocs, on peut mieux localiser les instants où erreurs de transmission se sont produites et restituer des coupes sismiques où les événements sismiques sont situés à leur vraie place.

Si ce type de contrôle permet de déceler certaines erreurs il n'en reste pas moins nécessaire de réduire le taux d'erreur de transmission à des valeurs extrêmement faibles et aussi de réduire l'effet de tout parasite survenant de façon aléatoire, sur la forme du signal reconstitué après réception ou dans certains cas, celle du signal après certaines opérations classiques de traitement. On sait par exemple que toute corrélation entre un signal sismique reçu avec un signal émis, opération qui intervient habituellement dans le cas où la source d'ébranlements sismique est un vibrateur, a pour effet d'amplifier une erreur isolée sur un échantillon de signal reçu en la reportant sur toute la trace corrélée.

La présente invention a pour objet une méthode de transmission de données sismiques à bande passante réduite et à taux d'erreurs de transmission très faible.

La méthode de transmission selon l'invention concerne la transmission de signaux sismiques numérisés entre des appareils d'acquisition de données dans des boîtiers d'acquisition répartis dans une zone d'exploration, adaptés à collecter chacun des signaux sismiques captés par un ou plusieurs récepteurs appropriés en réponse à des ébranlements transmis dans le sous-sol par une source sismique, sous la forme d'échantillons numérisés et les mémoriser, et un poste central de commande et d'enregistrement.

Elle est caractérisée en ce qu'elle comporte :

a) la formation dans chaque appareil d'acquisition de mots numériques constitués chacun par l'adjonction d'un groupe de n bits de contrôle à chaque échantillon de signal numérisé de N1 bits qui est à transmettre;

b) la mémorisation ordonnée des différents mots en blocs de N2 mots successifs,

c) pour chacun desdits blocs, la lecture séquentielle par entrelacement de mots de N2 bits obtenus successivement en regroupant tous les bits de même rang et ceci pour chacun des rangs successivement,

d) la formation de symboles numériques en combinant avec des pondérations appropriées plusieurs bits successifs du train de bits obtenus par ladite lecture,

e) la modulation par les symboles numériques successifs de la phase d'un signal porteur,

la méthode comportant également dans ledit poste central de commande et d'enregistrement :

f) la détection des symboles numérisés dans le signal porteur et leur décodage,

g) la reconstitution par désentrelacement des mots numériques de chaque bloc reçu sur un support de mémorisation adapté à contenir au moins les N2 mots d'un même bloc, et

h) la correction des erreurs éventuelles affectant chacun des mots numériques reconstitués, par décodage des n bits de contrôle associés, avant leur suppression.

Avec la méthode et le dispositif selon l'invention, on arrive à combiner deux objectifs :

- transmettre des débits élevés de données sismiques suivant un mode de transmission codée à bande passante limitée qui satisfait plus facilement aux limitations généralement en vigueur; et
- détecter et rectifier pratiquement toutes les erreurs qui peuvent survenir au cours des transmissions, dans un système de transmission sismique et notamment les erreurs inhérentes à la méthode utilisée de modulation par symboles numériques. ceci permet la réalisation d'enregistrements sismiques de qualité quelles que soient les conditions de transmission régnant dans la zone d'utilisation.

La méthode selon l'invention peut comporter en outre l'adjonction aux mots numériques à transmettre, de données supplémentaires de contrôle dans chacun des boîtiers d'acquisition et la détection dans le poste central, cette adjonction comportant par exemple l'association de données de synchronisation et de données d'identification et de repérage permettant la mesure précise des variations de la phase du signal porteur.

La formation de symboles numériques est obtenue avantageusement suivant un codage du type TFM par exemple.

On peut par exemple former des mots numériques par adjonction d'un groupe de 5 bits de contrôle à chaque échantillon de signal à 24 bits et mémoriser les données à transmettre sous la forme de blocs de 16 mots.

Le dispositif pour la mise en oeuvre de la méthode est caractérisé en ce qu'il comporte des appareils d'acquisition comprenant chacun :

a) un premier ensemble de codage comportant des moyens pour former des mots en adjoignant un groupe de n bits de codage à chaque échantillon numérisé de N1 bits,

- un premier moyen de mémorisation pour des blocs de N2 mots chacun avec leur groupe de bits de codage;

c) un premier moyen de gestion réalisant l'écriture des mots numériques dans le premier moyen de mémorisation et leur lecture séquentielle par entrelacement pour former des mots de chacun N2 bits;

d) un deuxième ensemble de codage de transmission comportant des moyens pour former des symboles numériques en combinant avec des pondérations appropriées plusieurs bits successifs de chaque train de bits extrait du premier moyen de mémorisation;

e) un émetteur adapté à la transmission des mots numériques issus du deuxième ensemble de codage, sur une voie de transmission reliant chaque appareil d'acquisition au poste central de commande et d'enregistrement;

le dispositif comportant également dans ledit poste central :

f) un récepteur adapté à ladite voie de transmission;

g) un premier ensemble de décodage comportant des moyens pour restituer les mots numériques entrelacés à partir des symboles numérisés;

h) un deuxième moyen de mémorisation adapté à contenir au moins les N2 mots numérisés d'un bloc;

i) un deuxième moyen de gestion réalisant le rangement des mots numériques dans le deuxième moyen de mémorisation et leur désentrelacement; et

j) un deuxième ensemble de décodage pour dissocier les données transmises de leurs groupes de codage respectifs et corriger à partir de ceux-ci les erreurs affectant lesdites données.

Chaque appareil d'acquisition comporte par exemple des moyens pour associer des mots de synchronisation auxdites séries de mots numériques, et le poste central comporte des moyens de corrélation pour détecter les mots de synchronisation.

Le deuxième ensemble de codage peut comporter des moyens pour associer des mots numériques propres à obtenir des variations de phase de valeurs déterminées (nulle et égale à $\pm \pi/4$ par exemple) et l'ensemble de décodage comporte des moyens de calibration pour calibrer les moyens de restitution des mots numériques à partir des symboles numérisés de ces mots numériques associés.

D'autres caractéristiques et avantages de la méthode et du dispositif selon l'invention apparaîtront mieux à la lecture de la description ci-après d'un mode de réalisation décrit à titre d'exemple non limitatif, en se référant aux dessins annexés où :

- la Fig.1 montre un système d'acquisition et de transmission sismique implanté sur une zone d'exploration;
- la Fig.2 montre sous forme de tableau un ensemble d'échantillons numérisés constituant un signal ou trace à transmettre;
- la Fig.3 montre un mot numérique formé d'un échantillon numérisé pourvu d'un suffixe de codage à n bits;
- la Fig.4 montre schématiquement un moyen de mémorisation dans chaque appareil d'acquisition, sous la forme d'un tableau de N2 mots pour un bloc de mots numériques;
- la Fig.5 montre l'ordre de succession des bits obtenus par une lecture entrelacée du moyen de mémorisation;
- la Fig.6 montre un schéma synotique d'un mode de réalisation du dispositif de mise en oeuvre inclus dans chaque appareil d'acquisition et le poste central de commande et d'enregistrement; et
- la Fig. 7 montre plus en détail un ensemble de décodage dans le poste central.

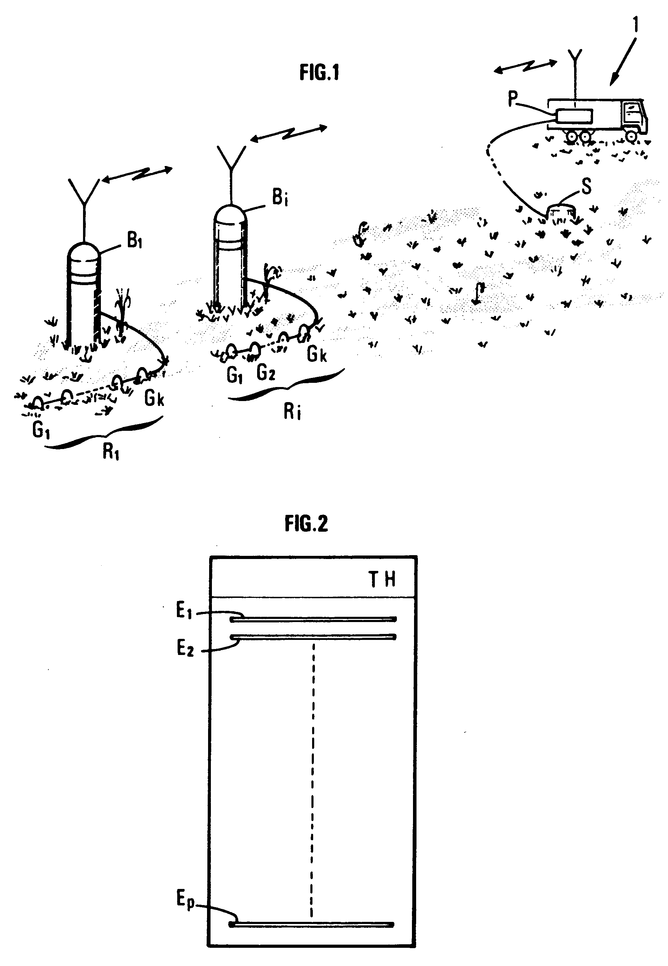

Le système selon l'invention est adapté (Fig.1) à établir des communications codées entre un ensemble d'appareils ou boîtiers d'acquisition B1... Bi etc et un poste central de commande et d'enregistrement installé sur un camion 1. Chaque appareil est adapté à collecter des signaux sismiques captés par un ou éventuellement plusieurs récepteurs sismiques R1 ... Ri etc couplés avec le sol, ces signaux correspondant à des échos sur des réflecteurs souterrains d'ébranlements appliqués au sol par une source sismique S d'un type quelconque telle qu'un vibrateur. Les appareils Bi numérisent les signaux captés et les enregistrent. A la fin de chaque cycle d'émission-réception par exemple, les appareils d'acquisition commandés en séquence par le poste central, lui transmettent les données qu'ils ont mémorisées. Ils sont disposés de préférence dans des bouées étanches lorsque l'on doit opérer dans des zones humides (lacs, marécages, forêts etc). Un système d'acquisition peut comporter plusieurs centaines d'appareils Bi associés à des récepteurs distants de plusieurs dizaines de mètres les uns des autres.

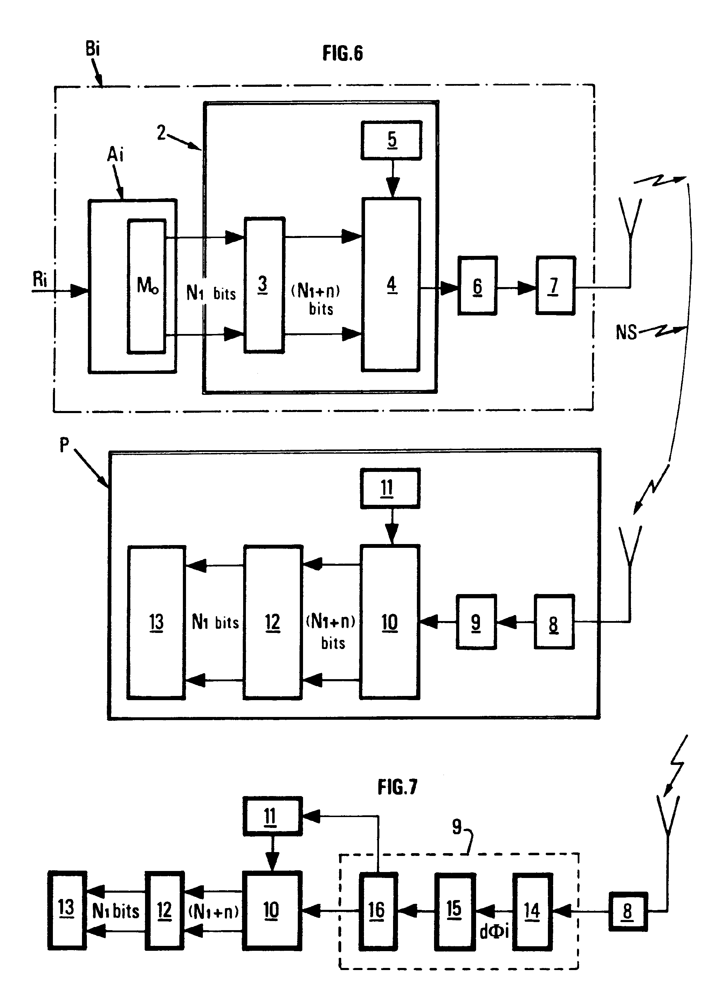

Le dispositif selon l'invention est adapté à transmettre vers le poste central, les signaux mémorisés par chaque appareil qui constituent une trace sismique et se présentent (Fig.2) sous la forme d'une série E1 à Ep d'échantillons numérisés. Chaque série est produite dans chaque boîtier Bi par un appareil d'acquisition Ai (Fig.6) à partir des signaux captés par un ou plusieurs récepteurs Ri et elle est mémorisée dans une mémoire interne MO. Dans cette mémoire, on réserve des adresses pour y charger un certain nombre m de mots de synchronisation de N1 bits chacun, de structure bien définie.

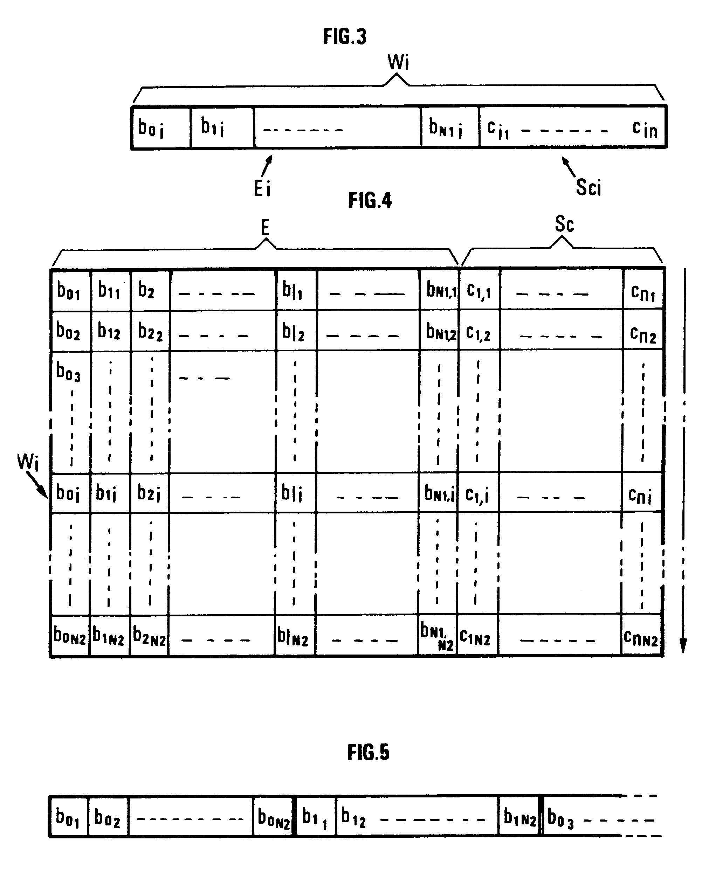

Suivant le mode de réalisation de la Fig. 6, le dispositif comporte tout d'abord un premier ensemble de codage 2 dans chaque boîtier Bi. Cet ensemble 2 comprend un élément de codage 3 adapté à former des mots numériques constitués en ajoutant un suffixe SCi de n bits c1, c2... cn à chacun des échantillons numérisés à N1 bits extraits successivement de la mémoire MO et à les transférer ensuite dans une unité de mémorisation 4 où ils sont regroupés par blocs de N2 mots. A titre d'exemple, si les mots de synchronisation et les échantillons numérisés ont 24 bits chacun, on choisit un suffixe de codage à 5 bits et on groupe les mots numériques de 29 bits ainsi constitués en blocs de 16 mots par exemple. Sur le tableau de la Fig.4 représentant cet élément 3, les mots numériques successifs Wi (bi1, bi2... bN1i, c1i... cni) sont rangés suivant des lignes avec leurs bits de même poids bl1, bl2,... bli... blN2 rangés en colonnes.

Le dispositif comporte un élement 5 de lecture séquentielle par entrelacement adapté à commander l'extraction des mots numériques de l'unité de mémoire 4, de façon à lire en séquence tous les bits de même poids de l'ensemble des mots numériques du même bloc, avant d'extraire en séquence tous les bits de la colonne voisine. On constitue ainsi une série de bits telle que celui de la Fig.5, qui est transmise à un deuxième ensemble de codage 6 appliquant un codage de transmission. Les mots codés issus du deuxième ensemble de codage 6 sont appliqués à un émetteur 7 adapté à la voie de transmission employée. Il peut s'agir d'un émetteur d'ondes hertziennes par exemple.

Au poste central P, les signaux arrivant par la voie de transmission choisie et éventuellement affectés durant la transmission (par un parasite NS par exemple), sont reçus par un récepteur 8 adapté à restituer la série de (N1+n)∗ N2 bits de chaque bloc transmis. Un ensemble de décodage 9 du même type que l'ensemble de codage 6, rétablit la série de bits en ôtant le codage particulier de transmission utilisé. Les séries de bits sont ensuite transmis à une unité de mémoire 10. Un élément 11 de gestion de l'unité de mémoire 10 est adapté dans un premier temps, à contrôler le rangement dans celle-ci des séries de bits reçues. Ce même élément de gestion 11 contrôle ensuite une lecture de la mémoire 10 avec désentrelacement, de façon à reconstituer chacun des N2 mots numériques de (N1+n) bits initiaux, avant de les transférer dans une unité de décodage 12 adaptée à comparer chaque échantillon de signal b0i, b1i,... bN1i à N1 bits avec son suffixe Ci1 ...Cin de façon à détecter et rectifier les erreurs de transmission. Le suffixe est alors ôté et les échantillons numérisés à N1 bits sont stockés dans une unité de mémorisation 13.

Suivant un agencement préféré de réalisation, on utilise un mode de codage propre à diminuer la bande passante requise habituellement par la transmission de données numérisées tel qu'un codage du type TFM. Suivant ce mode la transmission de chacun des bits bi d'un flot de bits à transmettre est effectuée en appliquant à la phase d'un signal porteur une variation de phase :

$$d\Phi_i = \frac{\pi}{4}(1/2B_{i-1} + B_i + 1/2B_{i+1})$$

où $B_i$=-1 si $b_i$=0, $B_i$=+1 si $b_i$=1 et $B_{i-1}$ et $B_{i+1}$ sont les valeurs correspondantes attribuées aux bits $b_{i-1}$ et $b_i$ adjacents du bit $b_i$ dans le flot de bits à transmettre.

Le dispositif comporte dans ce cas des moyens spécifiques pour réaliser ce type de transmission codée et pour faciliter le repérage des données reçues au poste central. Ces moyens spécifiques comportent tout d'abord une mémoire MO (Fig. 6) avec des adresses réservées pour un nombre défini m de mots de synchronisation de $N_1$ bits chacun, et organisée pour que toute série de mots numériques à transmettre en soit extraite, précédée des m mots de synchronisation de structure bien définie. Les moyens spécifiques sont inclus dans le deuxième ensemble de codage 6 et l'ensemble de décodage 9.

L'ensemble de codage 6 comporte des moyens pour faire précéder le flot de bits lu avec entrelacement dans la mémoire 4 de deux préambules successifs. Le premier préambule est constitué d'un nombre fixe p de mots numériques de ($N_1$+n) bits chacun. Chacun de ces p mots comporte une suite alternée de 0 et de 1 logiques 0101... qui suivant la symbolisation TFM rappelée ci-dessus, se traduit par une variation de phase nulle. Durant ce préambule le signal transmis est le signal porteur sans modulation. Pendant le laps de temps d'émission du premier préambule, le récepteur 8 qui reçoit le signal porteur sans modulation, peut donc se caler en phase avec lui.

Le second préambule ajouté est une suite constituée d'un nombre fixe q de mots numériques chacun de ($N_1$+n)bits également. Chacun d'eux comporte une suite double alternée du type 00110011... . Suivant la symbolisation TFM, la variation de phase $d\Phi_i$ résultant de cette deuxième suite est alternativement de - $\pi$/4 et + $\pi$/4.

L'ensemble de décodage 9 correspondant dans la station centrale, comporte (Fig. 7) un détecteur 14 des écarts de phase successifs $d\Phi_i$. Le réglage ou tarage initial du détecteur 14 est effectué durant la réception du deuxième préambule codé sous la forme d'écarts de phase connus avec précision alternativement de + $\pi$/4 et - $\pi$/4. Les écarts de phase successifs mesurés par le détecteur 14, sont appliqués à un décodeur 15 dit machine à états (state machine) et permettent de régler sa bonne calibration. Ce décodeur 15 restitue à partir des symboles reçus, le flot de bits émis avec entrelacement et charge la mémoire 10. Un élément de corrélation 16 est interposé entre le décodeur 15 et la mémoire 10. Il compare à chaque instant le flot de bits reçu de la machine à états 15 avec une configuration attendue de bits correspondant aux mots de synchronisation entrelacés et, à la détection de cette correspondance, il émet un signal de détection S qui sert à piloter l'élément 11 associé à la mémoire 10 et gérant la lecture avec désentrelacement des mots rangés dans celle-ci aussi en utilisant tout autre signal porteur (signal optique par exemple) ou un quelconque support physique tel que des lignes de transmission.

On ne sortirait pas du cadre de l'invention, en choisissant un autre mode de codage connnu tel que NRZ ou HDB3 à un ou plusieurs niveaux, pour transmettre les données sismiques à un poste central, et permettant éventuellement de réduire la bande passante généralement nécessaire dans les systèmes de transmission sismique.

Par la méthode et le dispositif de codage qui ont été décrits, on arrive dans la pratique à détecter et rectifier pratiquement toutes les erreurs de transmission pouvant survenir. Il s'ensuit que l'on peut reconstituer des traces sismiques pratiquement sans défaut.

Dans le mode de réalisation décrit, les transferts de données sont effectués directement entre les appareils d'acquisition et le poste central. On ne sortirait pas non plus du cadre de l'invention en appliquant le mode de codage décrit à un système où un ou plusieurs éléments-relais seraient interposés pour relayer les transmissions provenant des différents boîtiers d'acquisition, comme il est décrit dans les brevets US précités 4,979,152 et 4,815,044.

## Revendications

1. Méthode de transmission de données sismiques à taux d'erreur très réduit entre des boîtiers d'acquisition de données (Ai) dans les boîtiers (Bi) répartis dans la zone d'exploration adaptés à collecter chacun des signaux sismiques captés par un ou plusieurs récepteurs (Ri) appropriés en réponse à des ébranlements transmis dans le sous-sol à explorer par une source sismique (5), sous la forme d'échantillons numérisés et les mémoriser et un poste central de commande et d'enregistrement (8), caractérisée en ce qu'elle comporte :

    a) la formation dans chaque appareil d'acquisition (B$_i$) de séries de mots numériques constitués chacun par l'adjonction d'un groupe de n bits de contrôle à chaque échantillon de signal numérisé de N1 bits qui est à transmettre;

    b) la mémorisation ordonnée des différents mots en blocs de N2 mots successifs;

    c) pour chacun desdits blocs, la lecture séquentielle par entrelacement de mots de N2 bits obtenus successivement en regroupant tous les bits de même rang et ceci pour chacun des rangs successivement;

    d) la formation de symboles numériques en combinant avec des pondérations appropriées plusieurs bits successifs du train de bits obtenus par ladite lecture;

    e) la modulation par les symboles numériques successifs de la phase d'un signal porteur;

    la méthode comportant également dans ledit poste central de commande et d'enregistrement :

    f) la détection des symboles numériques dans le signal porteur et le décodage;

    g) la reconstitution par désentrelacement des mots numériques de chaque bloc reçu sur un support de mémorisation adapté à contenir au moins les N2 mots d'un même bloc, et

    h) la correction des erreurs éventuelles affectant chacun des mots numériques reconstitués, par décodage des n bits de contrôle associés, avant leur suppression.

2. Méthode de transmission selon la revendication 1, caractérisée en ce qu'elle comporte en outre l'adjonction aux mots numériques à transmettre de données supplémentaires de contrôle dans chacun desdits boîtiers d'acquisition et la détection dans le poste central.

3. Méthode selon la revendication 2, caractérisée en ce que l'adjonction de données supplémentaires comporte l'association de données de synchronisation et de données d'identification et de repérage permettant la mesure précise des variations de la phase du signal porteur.

4. Méthode selon l'une des revendications précédentes caractérisée en ce que la formation de symboles numériques est obtenue suivant un codage du type TFM.

5. Méthode selon l'une des revendications 1 à 4, caractérisée en ce que l'on forme des mots numériques par adjonction d'un groupe de 5 bits de contrôle à chaque échantillon de signal à 24 bits.

6. Méthode selon l'une des revendications 1 à 5, caractérisée en ce que l'on mémorise les données à transmettre sous la forme de blocs de 16 mots.

7. Dispositif pour la mise en oeuvre de la méthode selon l'une des revendications précédentes, caractérisé en ce qu'il comporte des appareils d'acquisition (Ai) comprenant chacun

    a) un premier ensemble de codage (3) comportant des moyens pour former des mots en adjoignant un groupe de n bits de codage à chaque échantillon numérisé de N1 bits,

    - un premier moyen de mémorisation (4) pour des blocs de N2 mots chacun avec leur groupe de bits de codage;

    c) un premier moyen de gestion (5) réalisant l'écriture des mots numériques dans ledit premier moyen de mémorisation (4) et leur lecture séquentielle par entrelacement pour former des mots de chacun N2 bits;

    d) un deuxième ensemble de codage de transmission (6) comportant des moyens pour former des symboles numériques en combinant avec des pondérations appropriées plusieurs bits successifs de chaque train de bit extrait du premier moyen de mémorisation (4);

    e) un émetteur (7) adapté à la transmission des mots numériques issus du deuxième ensemble de codage, sur une voie de transmission reliant chaque appareil d'acquisition au poste central de commande et d'enregistrement (P);

    le dispositif comportant également dans ledit poste central :

    f) un récepteur (8) adapté à ladite voie de transmission;

    g) un premier ensemble de décodage (9) comportant des moyens pour restituer les mots numériques entrelacés à partir des symboles numérisés;

    h) un deuxième moyen de mémorisation (10) adapté à contenir au moins les N2 mots numérisés d'un bloc;

i) un deuxième moyen de gestion (11) réalisant le rangement des mots numériques dans le deuxième moyen de mémorisation (10) et leur désentrelacement; et

j) un deuxième ensemble de décodage (12) pour dissocier les données transmises de leurs groupes de codage respectifs et corriger à partir de ceux-ci les erreurs affectant lesdites données.

**8.** Dispositif selon la revendication 7, caractérisé en ce que chaque appareil d'acquisition comporte des moyens pour associer des mots de synchronisation auxdites séries de mots numériques, et le poste central comporte des moyens de corrélation (16) pour détecter les mots de synchronisation.

**9.** Dispositif selon la revendication 8, caractérisé en ce que le deuxième ensemble de codage (6) comporte des moyens pour associer des mots numériques propres à obtenir des variations de phase de valeurs déterminées et l'ensemble de décodage comporte des moyens de calibration (14, 15) pour calibrer les moyens de restitution des mots numériques à partir des symboles numérisés de ces mots numériques associés.

**10.** Dispositif selon l'une des revendications précédentes, caractérisé en ce qu'il comporte au moins un élément-relais interposé dans la transmission entre certains au moins des appareils d'acquisition et ledit poste central, lequel élément-relais assurant le transfert vers le poste central des mots numériques de chaque bloc formés par entrelacement.

**Patentansprüche**

**1.** Verfahren zur Übertragung von seismischen Daten mit stark reduzierter Fehlerrate zwischen Datenerfassungsgeräten (Ai) in in der Explorationszone verteilten Geräten (Bi), von denen jedes zum Sammeln von seismischen Daten ausgelegt ist, die von einem oder mehreren geeigneten Empfängern (Ri) als Antwort auf von einer seismischen Quelle (S) ausgesendete Erschütterungen im zu explorierenden Untergrund aufgenommen und in Form digitalisierter Abtastungen gespeichert werden, und einer zentralen Steuer- und Registrierstelle (8), dadurch gekennzeichnet, daß es aufweist:

a) in jedem Erfassungsapparat (Bi) die Bildung von Reihen digitaler Wörter, von denen jedes durch Hinzufügung einer Gruppe von Kontrollbits zu jeder digitalisierten und zu übertragenden Signalabtastung von N1 Bits zusammengesetzt ist;

b) die geplante Speicherung verschiedener Wörter in Blöcken von N2 schrittweise aufeinanderfolgenden Wörtern;

c) für jeden dieser Blöcke das aufeinanderfolgende Lesen durch Ineinanderschachteln von schrittweise aufeinanderfolgend erhaltenen Wörtern mit N2 Bits, indem alle Bits von gleichem Rang und dieses für jeden der Ränge zusammengefaßt werden;

d) die Bildung digitaler Zeichen, indem mehrere schrittweise aufeinanderfolgende Bits des durch das erwähnte Lesen erhaltenen Bitzuges mit geeigneten Bewertungen kombiniert werden;

e) die Modulation der Phase eines Signalträgers durch die schrittweise aufeinanderfolgenden digitalen Zeichen;

daß das Verfahren in der zentralen Steuer- und Registrierstelle gleichfalls aufweist:

f) die Detektion der digitalen Zeichen im Signalträger und die Decodierung;

g) die Wiederherstellung durch Entschachtelung der digitalen Wörter jedes empfangenen Blocks über eine für die Aufnahme von wenigstens die N2 Wörter eines gleichen Blocks ausgelegte Speicherunterstützung;

h) die Korrektur eventueller Fehler, die auf jedes der digitalen, wiederhergestellten Wörter einwirken, durch Decodierung der n zugeordneten Kontrollbits, vor deren Unterdrückung.

**2.** Verfahren zur Übertragung nach Anspruch 1, dadurch gekennzeichnet, daß es überdies die Hinzufügung von ergänzenden Steuerdaten zu den zu übertragenden digitalen Wörtern in jedem der erwähnten Erfassungsgeräte und die Detektion in der zentralen Stelle aufweist.

**3.** Verfahren nach Anspruch 2, dadurch gekennzeichnet, daß die Hinzufügung der ergänzenden Daten die Zuordnung von Synchronisierungsdaten sowie von Identifizierungs- und Markierungsdaten umfaßt, was die genaue Messung der Phasenänderungen des Signalträgers gestattet.

**4.** Verfahren nach einem der vorhergehenden Ansprüche, dadurch gekennzeichnet, daß die Bildung von digitalen Zeichen gemäß einer Codierung vom Typ TFM erhalten wird.

**5.** Verfahren nach einem der Ansprüche 1 bis 4, dadurch gekennzeichnet, daß die digitalen Wörter durch Hinzufügung einer Gruppe von 5 Kontrollbits zu jeder Signalabtastung mit 24 Bits gebildet wird.

**6.** Verfahren nach einem der Ansprüche 1 bis 5, dadurch gekennzeichnet, daß die zu übertragenden Daten in einer Form von Blöcken mit 16 Wörtern gespeichert werden.

**7.** Einrichtung zur Durchführung des Verfahrens nach einem der vorhergehenden Ansprüche, dadurch gekennzeichnet, daß sie Erfassungsapparate (Ai) aufweist, von denen jeder umfaßt:

a) eine erste Codiereinheit (3), die zur Wörterbildung Mittel aufweist, wobei zu jeder digitalisierten Abtastung von N1 Bits eine Gruppe von n Codierbits hinzugefügt wird;

b) ein erstes Speichermittel(4) für die Blöcke von N2 Wörtern, jedes davon mit deren Gruppe von Codierbits;

c) ein erstes Verarbeitungsmittel (5), das das Einschreiben der digitalisierten Wörter in das erwähnte erste Speichermittel (4) und deren aufeinanderfolgendes Lesen mit Ineinanderschachtelung zur Bildung der Wörter mit jeweils N2 Bits realisiert;

d) eine zweite Übertragungscodiereinheit (6), die Mittel zur Bildung digitaler Zeichen aufweist, indem mehrere schrittweise aufeinanderfolgende Bits jedes aus dem ersten Speichermittel (4) herausgezogenen Bitzuges mit geeigneten Bewertungen kombiniert werden;

e) einen Sender (7), der für die Übertragung digitaler, von der zweiten Codiereinheit stammender Wörter über einen Übertragungsweg ausgelegt ist, der jeden Erfassungsapparat mit der zentralen Steuer- und Registrierstelle (P) verbindet;

f) einen an den erwähnten Übertragungsweg angepaßten Empfänger (8);

g) eine erste Decodiereinheit (9), die Mittel zur Wiederherstellung der digitalen, ineinandergeschachtelten Wörter, ausgehend von den digitalisierten Zeichen, aufweist;

h) ein zweites Speichermittel (10), das für die Aufnahme der wenigstens N2 digitalisierten Wörter eines Blocks ausgelegt ist;

i) ein zweites Verarbeitungsmittel (11), das die Rangfolge der digitalisierten Wörter im zweiten Speichermittel (10) und deren Entschachtelung realisiert; und

j) eine zweite Decodiereinheit (12) zum Entbinden der übertragenen Daten von ihren jeweiligen Codierungsgruppen und, ausgehend von diesen, zur Korrektur der auf die erwähnten Daten einwirkenden Fehler.

**8.** Einrichtung nach Anspruch 7, dadurch gekennzeichnet, daß jeder Erfassungsapparat Mittel zur Zuordnung von Synchronisierungswörtern zu den erwähnten Reihen digitaler Wörter aufweist, und daß die zentrale Stelle mit Korrelationsmitteln (16) zur Detektierung der Synchronisierungswörter versehen ist.

**9.** Einrichtung nach Anspruch 8, dadurch gekennzeichnet, daß die zweite Codiereinheit (6) Mittel zur Zuordnung digitaler Wörter aufweist, die dazu geeignet sind, Phasenänderungen von festgelegten Werten zu erzielen, und daß die Decodiereinheit Kalibriermittel (14,15) zur Kalibrierung der Mittel zur Wiederherstellung der digitalen Wörter, ausgehend von den digitalisierten Zeichen dieser zugeordneten digitalen Wörter, enthält.

**10.** Einrichtung nach einem der vorhergehenden Ansprüche, dadurch gekennzeichnet, daß sie zumindest zwischen bestimmten der Erfassungsapparate und der erwähnten zentralen Stelle wenigstens eine zwischengeschaltete Relais-Station aufweist, wobei diese Relais-Station den Übergang der durch Verschachtelung gebildeten, digitalen Wörter jedes Blocks zur zentralen Stelle sicherstellt.

**Claims**

**1.** A method of transmitting seismic data with a very low error rate between data acquisition boxes (Ai) in housings (Bi) distributed over an exploration zone each programmed to acquire seismic data picked up by one or several appropriate receivers (Ri) in response to vibrations transmitted in the sub-soil under exploration by a seismic source (5) in the form of digitised sample and store them in memory, and a central control and recording station (8), characterised in that it consists in:

a) forming in each acquisition device (Bi) series of digital words each made up by adjoining a group of n check bits to each N1-bit digitised signal sample to be transmitted;

b) storing the different words in memory in order in blocks of N2 successive words;

c) sequentially reading each of the blocks by interlacing words of N2 bits obtained successively by regrouping all the bits of the same value and performing this operation for each of the values successively;

d) forming digital symbols by combining several successive bits from the stream of bits obtained by reading with appropriate weightings;

e) using the successive digital symbols to modulate the phase of a carrier signal;

at the control and recording station, the method also consists in:

f) detecting digital symbols in the carrier signal and decoding them;

g) reconfiguring by removing the interlacing the digital words of each block received on a memory support designed to contain at least the N2 words of a single block, and

h) correcting any errors affecting each of the reconfigured digital words by decoding the associated n check bits before suppressing them.

2. A transmission method in accordance with claim 1, characterised in that it further consists in combining additional control data with the digital words to be transmitted in each of the acquisition boxes and detection of the same in the central station.

3. A method in accordance with claim 2, characterised in that the addition of supplementary data includes combining synchronising data as well as identifying and locating data so that the variations in the phase of the carrier signal may be accurately measured.

4. A method in accordance with one of the previous claims, characterised in that digital symbols are obtained by using a coding of the TFM type.

5. A method in accordance with one of claims 1 to 4, characterised in that digital words are formed by adding a group of 5 check bits to each 24-bit signal sample.

6. A method in accordance with one of claims 1 to 5, characterised in that the transmission data are stored in memory in the form of 16-word blocks.

7. A device for implementing the method in accordance with one of the previous claims, characterised in that it comprises acquisition apparatus (Ai), each piece of equipment having

a) a first encoding unit (3) with means to form words by adding a group of n coding bits to each digitised sample of N1 bits,

b) a first memory means (4) for blocks of N2 words, each with their group of coding bits;

c) a first management means (5) handling the writing of the digital words to the first memory means (4) and their sequential reading by interlacing to form words of N2 bits each;

d) a second transmission encoding unit (6) having means for forming digital symbols by combining several successive bits of each bit stream extracted from the first memory means (4) with appropriate weightings;

e) a transmitter (7) designed to transmit the digital words from the second encoding unit on a transmission channel linking each piece of acquisition apparatus to the control and recording centre (P);

the device also having at the control centre:

f) a receiver (8) tuned to the transmission channel;

g) a first decoding unit (9) with means for reconfiguring the interlaced digital words from the digitised symbols;

h) a second memory means (10) designed to contain at least the N2 digitised words of one block;

i) a second management means (110 for arranging the digital words in order in the second memory means (10) and removing the interlacing; and

j) a second decoding unit (12) for dissociating the data transmitted from their respective coding groups and using these groups to correct any errors distorting the data.

8. A device in accordance with claim 7, characterised in that each piece of acquisition equipment has means for combining synchronising words with the digital series and the control centre has correlating means (16) to detect the synchronising words.

9. A device in accordance with claim 8, characterised in that the second encoding unit (6) has means for combining digital words conducive to obtaining phase variations of given values and the decoding unit has calibrating means (14, 15) for calibrating the means for reconfiguring the digital words from the digitised symbols combined with these digital words.

10. A device in accordance with one of the previous claims, characterised in that it has at least one relay element installed in the transmission circuit between some at least of the acquisition devices and the control centre, this relay element enabling the transfer of the digital words of each block formed by interlacing to the control centre.

**FIG.1**

**FIG.2**

**FIG.3**

$W_i$

| $b_{0i}$ | $b_{1i}$ | — - — - — | $b_{N1i}$ | $c_{i1}$ — — — — $c_{in}$ |

$E_i$  $Sc_i$

**FIG.4**

$E$  $Sc$

| $b_{01}$ | $b_{11}$ | $b_2$ | — - — - — — | $b_{l1}$ | — — - — — | $b_{N1,1}$ | $c_{1,1}$ | — - — - — | $c_{n1}$ |
|---|---|---|---|---|---|---|---|---|---|
| $b_{02}$ | $b_{12}$ | $b_{22}$ | — - — - — | $b_{l2}$ | — — — — | $b_{N12}$ | $c_{1,2}$ | — — — - — | $c_{n2}$ |
| $b_{03}$ | | | — - — | | | | | | |
| $b_{0i}$ | $b_{1i}$ | $b_{2i}$ | — - — - — | $b_{li}$ | — - — — | $b_{N1,i}$ | $c_{1,i}$ | — - — - — | $c_{ni}$ |
| $b_{0N2}$ | $b_{1N2}$ | $b_{2N2}$ | — - — - — | $b_{lN2}$ | — - — - — | $b_{N1,N2}$ | $c_{1N2}$ | — - — - — — | $c_{nN2}$ |

$W_i$

**FIG.5**

| $b_{01}$ | $b_{02}$ | — - — - — - — | $b_{0N2}$ | $b_{11}$ | $b_{12}$ | — — — — — — | $b_{1N2}$ | $b_{03}$ — - — - — |

## FIG.6

## FIG.7